# EUROPEAN PATENT APPLICATION

(11) **EP 3 670 240 A1**
(43) Date of publication of application: **24.06.2020**
(21) Application number: 18214538.3
(22) Date of filing: 20.12.2018
(51) Int. Cl.: B60L 15/20

(54) **A SYSTEM AND METHOD FOR CONTROLLING ENERGY CONSUMPTION IN A VEHICLE**

(71) Applicant: Ningbo Geely Automobile Research & Development Co. Ltd., Hangzhou Bay New District Ningbo 315336 (CN)
(72) Inventor: LEGNEDAHL, Niklas, 439 36 Onsala (SE)
(74) Representative: Zacco Sweden AB

(57) **Abstract**

A system, method and computer program product for controlling energy consumption in a vehicle (1) during driving of a route, the method comprising the steps of determining an energy consumption strategy for the route, wherein the energy consumption strategy comprises a total energy budget for a plurality of energy consuming vehicle components (10a, 10b, 10c, 10d, 20a, 20b, 20c, 20d); determining a value of an actual consumed total energy (ACTE) at at least a first route position (P1) along the route; determining a difference value (Dv) based on a difference in the actual consumed total energy value (ACTEv) and a predicted consumed total energy value (PCTEv); and determining an altered operation of at least one of the plurality of energy consuming vehicle components (10a, 10b, 10c, 10d, 20a, 20b, 20c, 20d).

## Description

### TECHNICAL FIELD

The disclosure pertains to the field of managing energy consumption in a vehicle.

### BACKGROUND

Vehicles today are equipped with components that consumes energy. One energy consuming component of a vehicle is the engine. There are different kinds of vehicle engines. Traditionally the engine is a combustion engine. There are also electric motors. In some vehicles, like plug-in hybrid electric vehicles, often have both a combustion engine and an electric motor. The energy needed for propelling vehicle with an electric motor is traditionally stored in an internal electric energy source such as a vehicle battery or a capacitor. The battery of an electric vehicle is typically charged when the electric vehicle is parked, by connecting the vehicle onboard power system with an external energy source, such as the grid. The battery of an electric vehicle is typically also charged during driving of a route, e.g. by using the electric motors as generators when reducing speed or when rolling downhill. The energy for propelling the electric vehicle is normally taken from the battery of the electric vehicle. Not only the engine of an electric vehicle is consuming energy. Examples of other energy consuming components in a vehicle are compartment climate control components such as fans, heaters and coolers. There are also energy consuming components needed for e.g. heating or cooling a vehicle battery of an electric vehicle. There are also further energy consuming components such as smaller electric motors for e.g. seat adjustments, door opener and convertible opener etc. Components such window, seat and steering wheel heaters are further examples. Charging and discharging a battery is also associated with a loss of energy, that is often turned into heat. There is a general desire in the world today to lower the energy consumption, both from an economic perspective but also from a sustainability perspective.

### SUMMARY

Today, during driving of a route with a vehicle, there are numerous routes with different topology and with varying traffic situations along the route. On top of that there are numerous of driving behaviors dependent on the occupant which escalates the variants where the vehicle need to perform energy efficient. Usually the main energy optimization is performed for a certification cycle which will be driven by very few occupants in real life, as well there are not all auxiliary functions of the vehicle that are utilized when doing this. How an occupant is using the vehicle, the mission, includes more than just driving the route, such as ensuring that the compartment climate is according to expectations as well as that the auxiliary functions of the vehicle can be utilized.

Also there are not much focus on when and how to utilize the energy in the vehicle for auxiliary functions of the vehicle in an efficient way, it has mainly been limited by performance, i.e. when the engine cannot perform it's task other energy consuming vehicle components might be constrained, or when the occupant requests it to be activated.

How an occupant is using the vehicle during driving of a route includes more than just propelling the vehicle the route, but also to ensure that the compartment climate is according to expectations as well as that other auxiliary functions of the vehicle can be utilized. One aim with the disclosure is that the occupant gets the perception that the vehicle is functioning as a whole during driving of a route, not just from a propulsion perspective but also from a user convenience perspective.

There is a demand for an improved way to control energy consumption in a vehicle during driving of a route. In particular there is a demand for managing different energy consuming vehicle components of the vehicle, from an energy saving perspective, during driving of a route.

The disclosure proposes a vehicle energy consumption control system for controlling the energy consumption in a vehicle during driving of a route. The vehicle energy consumption control system comprises a plurality of energy consuming vehicle components, at least a first energy consumption control module configured to determine the energy consumption of the plurality of energy consuming vehicle components and a processing circuitry operatively connected to the at least first energy consumption control module. The processing circuitry is configured to cause the vehicle energy consumption control system to determine an energy consumption strategy for the route, wherein the energy consumption strategy comprises a total energy budget for a plurality of energy consuming vehicle components. The plurality of energy consuming vehicle components comprise a first set of energy consuming vehicle components for propelling the vehicle and a second set of energy consuming vehicle components for auxiliary functions of the vehicle associated with vehicle occupant convenience. The processing circuitry is further configured to cause the vehicle energy consumption control system to determine a value of an actual consumed total energy at the first route position, wherein the actual consumed total energy is the total energy consumed by the energy consuming vehicle components, and determine a difference value based on a difference in the actual consumed total energy value and a predicted consumed total energy value at the first route position along the route according to the determined energy strategy, and in accordance with a determination that the difference value is deviating from a predetermined threshold value, determining an altered operation of at least one of the plurality of energy consuming vehicle components. The processing circuitry is further configured to cause the vehicle climate control system to execute the altered operation of the first energy consuming vehicle component. This means among others that with knowledge of the difference in the actual consumed total energy value and the predicted consumed total energy value, the use of the energy consuming vehicle components can be managed in order to maintain or improve the energy consumption strategy determined for the route. In particular the energy consuming vehicle components can be managed to operate differently in order to maintain or improve the energy consumption strategy determined for the route.

According to an aspect the vehicle energy consumption control system further comprises at least a first energy storage component configured to store energy to be consumed by the at least first energy consuming vehicle component during driving of the route. The at least first energy storage component cannot only be used as an energy source but also be used for storing generated energy during driving of the route e.g. when the electric motor is used as a generator, instead of wasting that energy.

According to an aspect the processing circuitry is further configured to cause the vehicle energy consumption control system to determine an altered operation of at least one of the plurality of energy consuming vehicle components comprising determining an operation of at least a first energy consuming vehicle component of the first set of energy consuming vehicle components for propelling the vehicle. This means that the operation of at least a first energy consuming vehicle component of the first set of energy consuming vehicle components for propelling the vehicle, such as an electric motor, is altered.

According to an aspect the processing circuitry is further configured to cause the vehicle energy consumption control system to determine an altered operation of at least one of the plurality of energy consuming vehicle components comprising determining an operation of at least a first energy consuming vehicle component of the second set of energy consuming vehicle components for auxiliary functions of the vehicle. This means that the operation of at least a first energy consuming vehicle component of the second set of energy consuming vehicle components for auxiliary functions of the vehicle, such as a vehicle compartment cooler for cooling a vehicle compartment, is altered.

According to an aspect the processing circuitry is further configured to cause the vehicle energy consumption control system to determine an altered operation of at least one of the plurality of energy consuming vehicle components comprising at least one of restricting the use of at least a first energy consuming vehicle component and denying the use a least a first energy consuming vehicle component. By restricting the use of the at least first energy consuming vehicle component, the at least first energy consuming vehicle component can still be used but with a different operation. By denying the use of the at least first energy consuming vehicle component, the energy consumption from that at least first energy consuming vehicle component is eliminated.

According to an aspect the processing circuitry is further configured to cause the vehicle energy consumption control system to determine an altered operation of at least one of the plurality of energy consuming vehicle components comprising at least one of enlarging the use at least a first energy consuming vehicle component and adding the use of a further energy consuming vehicle component. In other words the at least one of the plurality of energy consuming vehicle components is permitted to have an altered operation that consumes more energy than before the execution of the altered operation. By adding further energy consuming vehicle components the total energy consumption is increased. This allows further utilization of the energy consuming vehicle components.

The disclosure further proposes a method for controlling energy consumption in a vehicle during driving of a route. The method comprising the step of determining an energy consumption strategy for the route, wherein the energy consumption strategy comprises a total energy budget for a plurality of energy consuming vehicle components, wherein the plurality of energy consuming vehicle components comprise a first set of energy consuming vehicle components for propelling the vehicle and a second set of energy consuming vehicle components for auxiliary functions of the vehicle associated with vehicle occupant convenience. The method further comprising the step of determining a value of an actual consumed total energy at at least a first route position along the route, wherein the actual consumed total energy is the total energy consumed by the energy consuming vehicle components. The method further comprising the step of determining a difference value based on a difference in the actual consumed total energy value and a predicted consumed total energy value at the first route position along the route according to the determined energy strategy, and in accordance with a determination that the difference value is deviating from a predetermined threshold value. The method further comprising the step of determining an altered operation of at least one of the plurality of energy consuming vehicle components; followed by the step of executing the altered operation of the at least one of the plurality of energy consuming vehicle components. This means among others that with knowledge of the difference in the actual consumed total energy value and the predicted consumed total energy value, the use of the energy consuming vehicle components can be managed in order to maintain or improve the energy consumption strategy determined for the route. In particular the energy consuming vehicle components can be managed to operate differently in order to maintain or improve the energy consumption strategy determined for the route.

According to an aspect the step of determining an altered operation of at least one of the plurality of energy consuming vehicle components comprising determining an operation of at least a first energy consuming vehicle component of the first set of energy consuming vehicle components for propelling the vehicle. This means that the operation of at least a first energy consuming vehicle component of the first set of energy consuming vehicle components for propelling the vehicle, such as an electric motor, is altered.

According to an aspect the step of determining an altered operation of at least one of the plurality of energy consuming vehicle components comprising determining an operation of at least a first energy consuming vehicle component of the second set of energy consuming vehicle components for auxiliary functions of the vehicle. This means that the operation of at least a first energy consuming vehicle component of the second set of energy consuming vehicle components for auxiliary functions of the vehicle, such as a vehicle compartment cooler for cooling a vehicle compartment, is altered.

According to an aspect the step of determining a value of an actual consumed total energy further comprising determining a value of an actual remaining total energy, wherein the actual remaining total energy is the total remaining energy in at least a first energy storage component in the vehicle. The remaining total energy may be both positively and negatively affected during driving of a route. The actual remaining total energy at the first route position may be different compare to when the energy consumption strategy for the route was determined. By determining the value of the actual remaining total energy an updated energy consumption strategy for the route can be determined.

According to an aspect the altered operation of the energy consuming vehicle component is limited to at least one of a certain time period and a certain distance along the route. This means that after a certain time period or after a certain distance along the route, an updated difference value can be determined to see if the altered operation has been effective.

According to an aspect the step of determining an altered operation of at least one of the plurality of energy consuming vehicle components, is adapted so that an impact on at least one of the driving performance and the vehicle occupant comfort resulting from the altered operation of at least one of the plurality of energy consuming vehicle components is above a predefined threshold operation value for minimizing the effect of the altered operation. One purpose is to minimize the driving experience for the occupant during the altered operation of the at least one of the plurality of energy consuming vehicle components.

According to an aspect the step of determining an altered operation of at least one of the plurality of energy consuming vehicle components, comprising at least one of restricting the use of at least a first energy consuming vehicle component and denying the use of at least a first energy consuming vehicle component. By restricting the use of the at least first energy consuming vehicle component, the at least first energy consuming vehicle component can still be used but with a different operation. By denying the use of the at least first energy consuming vehicle component, the energy consumption from that at least first energy consuming vehicle component is eliminated.

According to an aspect the step of determining an altered operation of at least one of the plurality of energy consuming vehicle components, comprising at least one of enlarging the use at least a first energy consuming vehicle component and adding the use of a further energy consuming vehicle. In other words the at least one of the plurality of energy consuming vehicle components is permitted to have an altered operation that consumes more energy than before the execution of the altered operation. By adding further energy consuming vehicle components the total energy consumption is increased. This allows further utilization of the energy consuming vehicle components.

The disclosure further proposes a computer program product comprising a non-transitory computer readable medium, having thereon a computer program comprising program instructions, the computer program being loadable into a processing circuitry and configured to cause execution of the method when the computer program is run by the processing circuitry.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates vehicle energy consumption control system according to an aspect of the disclosure.
Figure 2a illustrates an exemplary route for a mission according to an aspect of the disclosure.
Figure 2b illustrates an exemplary altitude difference of a route for a mission according to an aspect of the disclosure.
Figure 2c illustrates an exemplary speed limit difference of a route for a mission according to an aspect of the disclosure.
Figure 3a illustrates an exemplary vehicle energy consumption control system with a processing circuitry in a portable electronic device according to an aspect of the disclosure.
Figure 3b illustrates an exemplary vehicle energy consumption control system with a processing circuitry in a remote server according to an aspect of the disclosure.
Figure 4 illustrates a flow chart of the method steps according to some aspects of the disclosure.
Figure 5 illustrates a computer program product according to some aspects of the disclosure.

### DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Today, during driving of a route with a vehicle, there is a there are numerous routes with different topology and with varying traffic situations along the route. On top of that there are numerous of driving behaviors dependent on the occupant, e.g. driving at different speeds, accelerating differently, which escalates the variants where the vehicle need to perform energy efficient. How an occupant is using the vehicle, the mission, includes more than just propelling the vehicle a certain route such as ensuring that the compartment climate is according to expectations as well as using other auxiliary functions of the vehicle.

The inventor has identified that today there are not much focus on when and how to plan and then utilize the energy in the vehicle for auxiliary functions of the vehicle in an efficient way. Auxiliary functions have mainly been limited by performance, i.e. when the engine cannot perform it's task other energy consuming vehicle components might be constrained, or when the occupant requests it to be deactivated or activated.

There is a demand for an improved way to plan and control the energy consumption in a vehicle during driving of a route. In particular there is a demand for planning and managing different energy consuming vehicle components of the vehicle, from an energy saving perspective, during driving of a route.

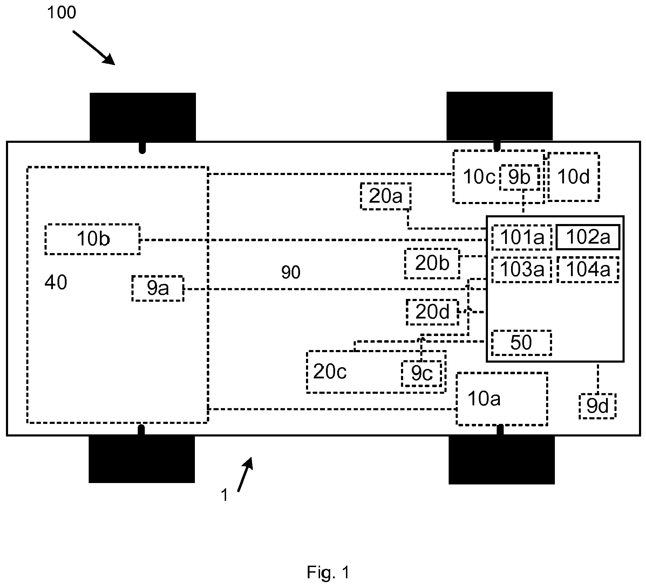

The disclosure proposes a vehicle energy consumption control system 100, illustrated in figure 1, for controlling the energy consumption in a vehicle 1 during driving of a route. The vehicle energy consumption control system 100 comprises a plurality of energy consuming vehicle components 10a, 10b, 10c, 10d, 20a, 20b, 20c, 20d. Figure 1 illustrates a vehicle energy consumption control system 100 according to an aspect of the disclosure including exemplary energy consuming vehicle components 10a, 10b, 10c, 10d, 20a, 20b, 20c, 20d. According to an aspect the energy consuming vehicle component 10a, 10b, 10c, 10d, 20a, 20b, 20c, 20d is any of: an electric motor 10a, 10c for propelling the vehicle; a vehicle battery 40, such as a high voltage vehicle battery for powering the vehicle 1; a vehicle battery charger for charging the vehicle battery, a vehicle battery heater 10b for heating the vehicle battery; a vehicle battery cooler for cooling the vehicle battery; an electric motor heater 10d for heating an electric motor 10a, 10c; a vehicle compartment cooler 20b for cooling a vehicle compartment; an electric motor for adjusting the setting of a vehicle seat; a seat heater 20a for heating the seat; an electric motor for opening a rooftop; an electric motor for opening a window; an electric motor for adjusting a mirror; a climate control unit for controlling the vehicle compartment humidity; a fan 20d for controlling the flow of air in the vehicle compartment; an engine start component for starting an engine; a gear box heater for heating a gearbox; a motor heater 10d for heating the motor; a light for lighting the surroundings or the interior of the vehicle; an in vehicle entertainment system for entertain occupants of the vehicle; a display unit 20c; a vehicle computer system for managing vehicle data.

According to an aspect the plurality of energy consuming vehicle components 10a, 10b, 10c, 10d, 20a, 20b, 20c, 20d are connected to a vehicle onboard electric power system 90. According to an aspect the plurality of energy consuming vehicle components 10a, 10b, 10c, 10d, 20a, 20b, 20c, 20d are interconnected via the vehicle onboard electric power system 90. According to an aspect the vehicle energy consumption control system 100 comprises a vehicle onboard electric power system 90 configured to be connected to an external energy source. According to an aspect the vehicle onboard electric power system 90 is configured to power the vehicle 1 during a mission. According to an aspect the vehicle onboard electric power system 90 is configured to be connectable to a at least a first energy storage component 40. According to an aspect the at least a first energy storage component 40 is a high voltage vehicle battery.

The vehicle energy consumption control system 100 further comprises at least a first energy consumption control module 50 configured to determine the energy consumption of the plurality of energy consuming vehicle components 10a, 10b, 10c, 10d, 20a, 20b, 20c, 20d. According to an aspect the at least a first energy consumption control module 50 is connected to sensor device 9a, 9b, 9c, 9d, as illustrated in figure 1. According to an aspect the vehicle energy consumption control system 100 further comprises a sensor device 9a, 9b, 9c, 9d operatively connected at least one of the plurality of energy consuming vehicle components 10a, 10b, 10c, 10d, 20a, 20b, 20c, 20d configured to obtain sensor data for determining the current status at least one of the plurality of energy consuming vehicle components 10a, 10b, 10c, 10d, 20a, 20b, 20c, 20d. According to an aspect the sensor device 9a, 9b, 9c, 9d is configured to obtain sensor data that is used for determining the energy consumption of at least one of the plurality of energy consuming vehicle components 10a, 10b, 10c, 10d, 20a, 20b, 20c, 20d. According to an aspect the sensor device is any of a voltage meter or an ampere meter for measuring the state of charge. According to an aspect the sensor device is an ampere-hours meter 9a, 9b, 9c for measuring used energy over a period of time. In one example as illustrated in figure 1, the ampere-hours meter 9a is connected to an energy storage component 40. In one example as illustrated in figure 1, the ampere-hours meter 9b is connected to an electric motor 10c. In one example as illustrated in figure 1, the ampere-hours meter 9c is connected to a display unit 20c. According to an aspect the sensor device is any of a motion sensor 9d such as an accelerometer or a gyroscope for detecting movements and/or relative movement, acceleration and position; a Global Positioning System, GPS, receiver for determining the geographical position; or any other sensor.

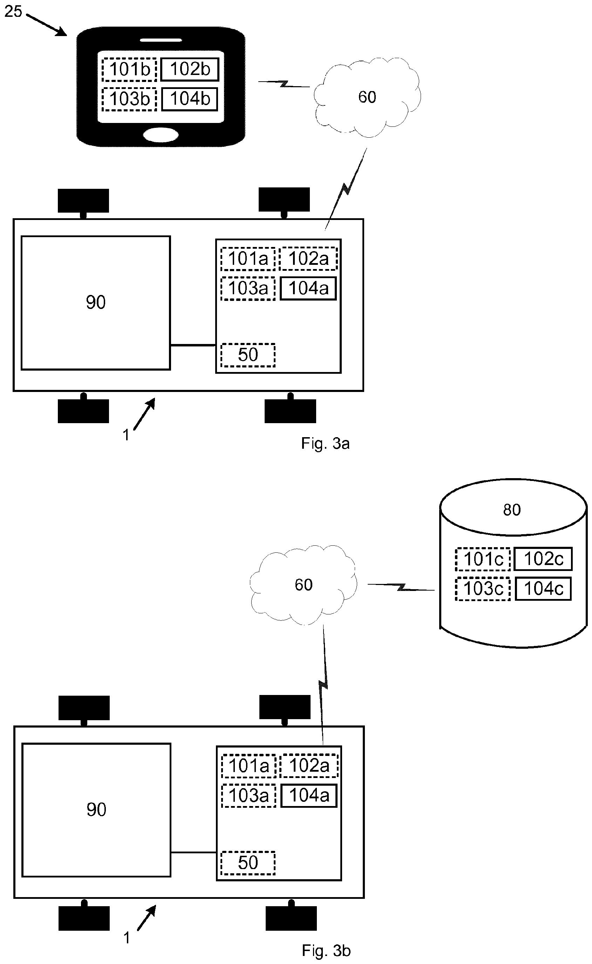

The vehicle energy consumption control system 100 further comprises a processing circuitry 102a, 102b, 102c operatively connected to the at least first energy consumption control module 50. According to an aspect the processing circuitry 102a, 102b, 102c is operatively connectable to the vehicle onboard electric power system 90. According to an aspect, as illustrated in Figure 3a and Figure 3b, the processing circuitry 102a, 102b, 102c is operatively connectable to a communication unit 104a, 104b, 104c adapted to communicate via a communication network 60.

According to an aspect the vehicle energy consumption control system 100 further comprises a user interface 101a, 101b, 101c operatively connectable to the processing circuitry 102a, 102b, 102c. According to an aspect the user interface 101a, 101b, 101c is configured to output information to an occupant of the vehicle 1. According to an aspect the user interface 101a, 101b, 101c is configured to receive input information from an occupant of the vehicle 1. According to an aspect the user interface 101a, 101b, 101c is any of a touch sensitive display, a display combined with a keyboard or a voice controlled user interface.

According to an aspect the vehicle mission preparation system 100 further comprises a memory 103a, 103b, 103c operatively connectable to the processing circuitry 102a, 102b, 102c. According to an aspect, as illustrated in Figure 3a and Figure 3b, the memory 103a, 103b, 103c is operatively connectable to a communication unit 104a, 104b, 104c configured to communicate via a communication network 60.

According to an aspect the vehicle energy consumption control system 100 further comprises a memory 103a, 103b, 103c operatively connectable to the processing circuitry 102a, 102b, 102c, wherein the processing circuitry 102a, 102b, 102c is further configured to obtain from the memory 103a, 103b, 103c at least one of, a time information data TID; a location information data LID; a route information data RID; a personal setting data PSD associated with the driving of the route by the vehicle 1.

In one example the communication network 60, as illustrated in Figure 3a and Figure 3b, is a standardized wireless local area network such as a Wireless Local Area Network, WLAN, Bluetooth™, ZigBee, Ultra-Wideband, Near Field Communication, NFC, Radio Frequency Identification, RFID, or similar network. In one example the communication network 60 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. The communication network 60 can also be a combination of both a local area network and a wide area network. The communication network 60 can also be a wired network. According to an aspect the communication network 60 is defined by common Internet Protocols.

Figure 3a illustrates an exemplary vehicle energy consumption control system 100 with a processing circuitry in a portable electronic device according to an aspect of the disclosure. In the example illustrated with Figure 3a, a portable electronic device 25, such as a smartphone or a tablet, with a processing circuitry 102b and a communication unit 104b, is connected to the communication unit 104a of the vehicle 1 via the communication network 60.

Figure 3b illustrates an exemplary vehicle energy consumption control system 100 with a processing circuitry in a remote server according to an aspect of the disclosure. In the example illustrated with Figure 3c, a remote server 80, with a processing circuitry 102c and a communication unit 104c, is connected to the communication unit 104a of the vehicle 1 via the communication network 60.

According to an aspect, as illustrated in Figure 1, the processing circuitry 102a is comprised in the vehicle 1 and connected to the vehicle onboard electric power system 90.

The processing circuitry 102a, 102b, 102c is configured to cause vehicle energy consumption control system 100 to determine an energy consumption strategy for the route, wherein the energy consumption strategy comprises a total energy budget for a plurality of energy consuming vehicle components 10a, 10b, 10c, 10d, 20a, 20b, 20c, 20d.

The plurality of energy consuming vehicle components 10a, 10b, 10c, 10d, 20a, 20b, 20c, 20d comprise a first set of energy consuming vehicle components 10a, 10b, 10c, 10d for propelling the vehicle and a second set of energy consuming vehicle components 20a, 20b, 20c, 20d for auxiliary functions of the vehicle 1 associated with vehicle occupant convenience.

According to an aspect determining an energy consumption strategy for the route depends on different data. According to an aspect determining an energy consumption strategy comprises obtaining from a memory 103a, 103b, 103c at least one of, a time information data TID; a location information data LID; a route information data RID and a personal setting data PSD associated with the route as basis for the determining an energy consumption strategy for the route. Any of the time information data TID, the location information data LID, the route information data RID and the personal setting data PSD associated with the planned mission by the vehicle 1 alone, or in combination, is used for determining an energy consumption strategy for the route. In an example a route slope, route length, the time of the day and a weather forecast temperature can be used for determining operation of the plurality of energy consuming vehicle components 10a, 10b, 10c, 10d, 20a, 20b, 20c, 20d and hence determining an energy consumption strategy for the route.

According to an aspect the time information data TID is associated with any of a departure time, an arrival time, a calendar event or a time of the day interval time. In one example a time of departure can be determined by time data from a calendar event. In one example an occupant is entering data such as departure time via a user interface 101a, 101b, 101c.

According to an aspect the location information data LID is associated the coordinates of a geographical location of any of a departure location, a destination location, a calendar location information, a way point location or a battery charging station location.

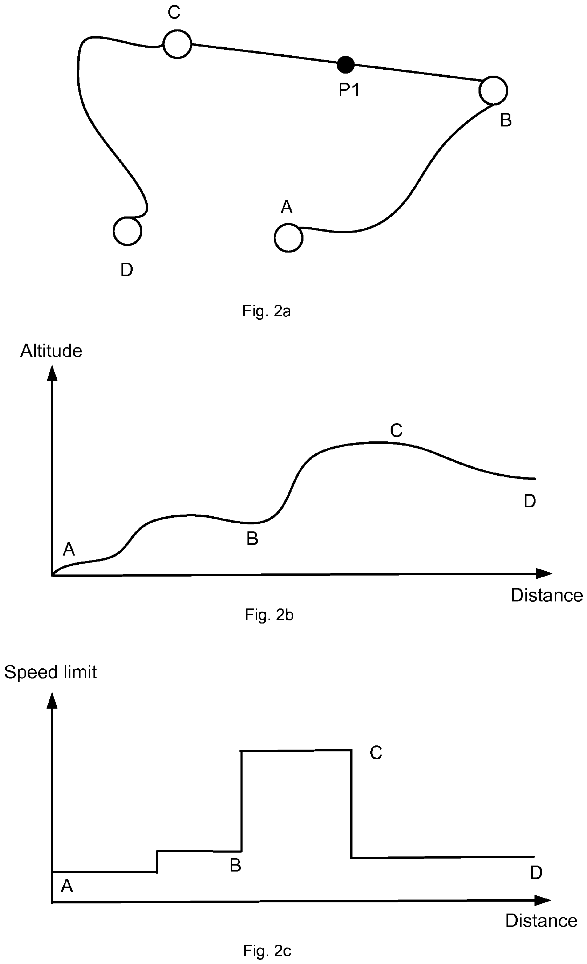

In one example, with reference to the example route as illustrated in Figure 2a, location information data LID is the geographical location of the starting point A, the point B, the first route position P1 between the point B and the point C, the point C and the destination point D. According to an aspect any of the time information data TID and the location information data LID is determined form historic data obtained from a memory 103a, 103b, 103c by comparing historic patterns of previous missions including previous time information data or previous location information data LID.

According to an aspect the route information data RID is associated with any of a route length data, a route slope data, a route forecast weather data, a route congestion data and a route speed limit data.

In one example, with reference to the example route illustrated in Figure 2a together with the altitude difference in Figure 2b and the speed limit difference in Figure 2c, the route information data gives a plurality of input. In the example there is an increase in the altitude when driving from point A to point B, and even a further increased altitude when driving from point B to point C, but then it is downhill form point C to point D. At the same time the speed limit on the different parts of the route require a certain energy consumption. The speed limit is lower between point A to point B compared with the speed limit between the point B and point C that is higher. In this example, and e.g. using a vehicle 1 with an electric motor, it can be determined that a certain amount of electric energy needs to be consumed to in order to manage both the increased altitude between point A and point C, and the increased speed on the route from point B to point C. At the same time it can be determined that less energy is needed to drive C to point D, where there is downhill and a lower speed limit.

In the example further route information data RID such as route forecast weather data can be used for determining the operation of at least one of the plurality of energy consuming vehicle components 10a, 10b, 10c, 10d, 20a, 20b, 20c, 20d. In the example the route forecast weather data tells that the temperature at the time for departure at point A will be freezing cold while the temperature gets milder during the route and is warmer at the estimated time of arrival at point D.

In the example, an occupant may have a personal setting data PSD that defines that the temperature in the vehicle compartment is desired so that no extra clothing is required, e.g. around normal indoor temperature. This will also consume a certain amount of energy while driving the route.

The known altitude and speed data, as exemplified in Figure 2b and Figure 2c, gives an indication of how much electric energy that needs to be consumed to propel the electric motor of the vehicle 1. Further, the departure time and location, gives a certain weather forecast information, and since temperature below freezing is expected at the departure time, i.e. the vehicle battery and the compartment is required to be warmed up. In this example, example energy consuming vehicle components involved are: the electric motor 10c for propelling the vehicle; the electric motor heater 10d for heating the electric motor 10c; the vehicle battery heater 10b for heating the vehicle battery; and the seat heater 20a for heating the seat. In the example the electric motor 10c for propelling the vehicle; the electric motor heater 10d for heating the electric motor 10c and the vehicle battery heater 10b for heating the vehicle battery belongs to the first set of energy consuming vehicle components 10a, 10b, 10c, 10d for propelling the vehicle. In the example the seat heater 20a for heating the seat belongs to the second set of energy consuming vehicle components 20a, 20b, 20c, 20d for auxiliary functions of the vehicle 1 associated with vehicle occupant convenience.

According to an aspect determining an energy consumption strategy for the route depends on different data. According to an aspect determining an energy consumption strategy comprises obtaining from a memory 103a, 103b, 103c at least one of, a time information data TID; a location information data LID; a route information data RID and a personal setting data PSD associated with the route as basis for the determining an energy consumption strategy for the route. Any of the time information data TID, the location information data LID, the route information data RID and the personal setting data PSD associated with the planned mission by the vehicle 1 alone, or in combination, is used for determining an energy consumption strategy for the route. In an example a route slope, route length, the time of the day and a weather forecast temperature can be used for determining operation of the plurality of energy consuming vehicle components 10a, 10b, 10c, 10d, 20a, 20b, 20c, 20d and hence determining an energy consumption strategy for the route.

According to an aspect the plurality of energy consuming vehicle components 10a, 10b, 10c, 10d, 20a, 20b, 20c, 20d are split into at least two sets of energy consuming vehicle components 10a, 10b, 10c, 10d, 20a, 20b, 20c, 20d. According to an aspect the plurality of energy consuming vehicle components 10a, 10b, 10c, 10d, 20a, 20b, 20c, 20d are split into a plurality of different of energy consuming vehicle components 10a, 10b, 10c, 10d, 20a, 20b, 20c, 20d. According to an aspect the first set of energy consuming vehicle components 10a, 10b, 10c, 10d for propelling the vehicle are prioritized over the second set of energy consuming vehicle components 20a, 20b, 20c, 20d for finalizing the mission. According to an aspect the first set of energy consuming vehicle components 10a, 10b, 10c, 10d are prioritized over the second set of energy consuming vehicle components 20a, 20b, 20c, 20d for the occupants convenience.

According to an aspect, the processing circuitry 102a, 102b, 102c is further configured to cause the vehicle energy consumption control system 100 to determine a value of an actual consumed total energy ACTE at the first route position P1, wherein the actual consumed total energy ACTE is the total energy consumed by the energy consuming vehicle components 10a, 10b, 10c, 10d, 20a, 20b, 20c, 20d, and determine a difference value Dv based on a difference in the actual consumed total energy value ACTEv and a predicted consumed total energy value PCTEv at the first route position P1 along the route according to the determined energy strategy. In one example the predicted consumed total energy value PCTEv at the first route position P1 is determined before starting the mission. In an example when determining the energy consumption strategy for the route the total energy budget for the plurality of energy consuming vehicle components 10a, 10b, 10c, 10d, 20a, 20b, 20c, 20d comprising using 80% of the maximum power of the electric motor 10c for propelling the vehicle during driving of the whole route; using the electric motor heater 10d for heating the electric motor 10c at maximum power for 10 minutes after start, and heating with only 10% the remaining time during driving of the route; using the vehicle battery heater 10b for heating the vehicle battery during driving of the whole route; and using the seat heater 20a for heating the seat every second ten minutes during driving of the whole route. The predicted consumed total energy value PCTEv at the first route position P1 along the route can hence be determined before starting driving of the route. According to an aspect a plurality of predicted consumed total energy values PCTEv1...PCTEvn at a plurality of route positions P1...Pn are determined before starting the mission.

According to an aspect the first energy consumption control module 50 is configured to determine the value of the actual consumed total energy ACTE at the first route position P1.

According to an aspect the difference value Dv can be both positive and negative. According to an aspect the difference value Dv is positive if more energy has been consumed compare to the predicted consumed total energy value PCTEv. According to an aspect the difference value Dv is negative if less energy has been consumed compare to the predicted consumed total energy value PCTEv. According to an aspect the absolute value of the difference value Dv is determined.

In accordance with a determination that the difference value Dv is deviating from a predetermined threshold value PTv, the processing circuitry 102a, 102b, 102c is further configured to determining an altered operation of at least one of the plurality of energy consuming vehicle components 10a, 10b, 10c, 10d, 20a, 20b, 20c, 20d. The processing circuitry 102a, 102b, 102c is further configured to cause the vehicle energy consumption control system 100 to execute the altered operation of the first energy consuming vehicle component 10a, 10b, 10c, 10d, 20a, 20b, 20c, 20d. This means among others that with knowledge of the difference in the actual consumed total energy value ACTEv and the predicted consumed total energy value PCTEv, the use of the energy consuming vehicle components 10a, 10b, 10c, 10d, 20a, 20b, 20c, 20d can be managed in order to maintain or improve the energy consumption strategy determined for the route. In particular the energy consuming vehicle components 10a, 10b, 10c, 10d, 20a, 20b, 20c, 20d can be managed to operate differently in order to maintain or improve the energy consumption strategy determined for the route.

According to an aspect the vehicle energy consumption control system 100 further comprises at least a first energy storage component 40a, 40b, 40c configured to store energy to be consumed by the at least first energy consuming vehicle component 10a, 10b, 10c, 10d, 20a, 20b, 20c, 20d during driving of the route. The at least first energy storage component 40a, 40b, 40c cannot only be used as an energy source but also be used for storing generated energy during driving of the route e.g. when the electric motor is used as a generator, instead of wasting that energy.

According to an aspect the processing circuitry 102a, 102b, 102c is further configured to cause the vehicle energy consumption control system 100 to determine an altered operation of at least one of the plurality of energy consuming vehicle components 10a, 10b, 10c, 10d, 20a, 20b, 20c, 20d comprising determining an operation of at least a first energy consuming vehicle component of the first set of energy consuming vehicle components 10a, 10b, 10c, 10d for propelling the vehicle 1. This means that the operation of at least a first energy consuming vehicle component of the first set of energy consuming vehicle components 10a, 10b, 10c, 10d for propelling the vehicle 1, such as an electric motor, is altered. In the example the altered operation of the first set of energy consuming vehicle components 10a, 10b, 10c, 10d for propelling the vehicle 1 comprising using only 55%, instead of 80%, of the maximum power of the electric motor 10c for propelling the vehicle the remaining time during driving of the route and using the electric motor heater 10d for heating the electric motor 10c with only 5%, instead of 10%, the remaining time during driving of the route.

According to an aspect the processing circuitry 102a, 102b, 102c is further configured to cause the vehicle energy consumption control system 100 to determine an altered operation of at least one of the plurality of energy consuming vehicle components 10a, 10b, 10c, 10d, 20a, 20b, 20c, 20d comprising determining an operation of at least a first energy consuming vehicle component of the second set of energy consuming vehicle components 20a, 20b, 20c, 20d for auxiliary functions of the vehicle 1. This means that the operation of at least a first energy consuming vehicle component of the second set of energy consuming vehicle components 10a, 10b, 10c, 10d for auxiliary functions of the vehicle 1, such as a vehicle compartment cooler for cooling a vehicle compartment, is altered. In the example the altered operation of the second set of energy consuming vehicle components 20a, 20b, 20c, 20d for auxiliary functions of the vehicle 1 comprising using the seat heater 20a for heating the seat only five minutes per hour, instead of every second ten minutes, the remaining time during driving of the route.

According to an aspect the processing circuitry 102a, 102b, 102c is further configured to cause the vehicle energy consumption control system 100 to determine an altered operation of at least one of the plurality of energy consuming vehicle components 10a, 10b, 10c, 10d, 20a, 20b, 20c, 20d comprising at least one of restricting the use of at least a first energy consuming vehicle component 10a, 10b, 10c, 10d, 20a, 20b, 20c, 20d and denying the use a least a first energy consuming vehicle component 10a, 10b, 10c, 10d, 20a, 20b, 20c, 20d. By restricting the use of the at least first energy consuming vehicle component 10a, 10b, 10c, 10d, 20a, 20b, 20c, 20d, the at least first energy consuming vehicle component 10a, 10b, 10c, 10d, 20a, 20b, 20c, 20d can still be used but with a different operation. By denying the use of the at least first energy consuming vehicle component 10a, 10b, 10c, 10d, 20a, 20b, 20c, 20d, the energy consumption from that at least first energy consuming vehicle component 10a, 10b, 10c, 10d, 20a, 20b, 20c, 20d is eliminated. In the example the altered operation of the first set of energy consuming vehicle components 10a, 10b, 10c, 10d for propelling the vehicle 1 comprising using only 55%, instead of 80%, of the maximum power of the electric motor 10c for propelling the vehicle.

According to an aspect the processing circuitry 102a, 102b, 102c is further configured to cause the vehicle energy consumption control system 100 to determine an altered operation of at least one of the plurality of energy consuming vehicle components 10a, 10b, 10c, 10d, 20a, 20b, 20c, 20d comprising at least one of enlarging the use at least a first energy consuming vehicle component 10a, 10b, 10c, 10d, 20a, 20b, 20c, 20d and adding the use of a further energy consuming vehicle component 10a, 10b, 10c, 10d, 20a, 20b, 20c, 20d. In other words the at least one of the plurality of energy consuming vehicle components 10a, 10b, 10c, 10d, 20a, 20b, 20c, 20d is permitted to have an altered operation that consumes more energy than before the execution of the altered operation. By adding further energy consuming vehicle components 10a, 10b, 10c, 10d, 20a, 20b, 20c, 20d the total energy consumption is increased. This allows further utilization of the energy consuming vehicle components 10a, 10b, 10c, 10d, 20a, 20b, 20c, 20d. In one example it is desired not to charge the at least first energy storage component 40 above a certain state of charge for reducing the wear of the at least first energy storage component 40. By enlarging the use at least a first energy consuming vehicle component 10a, 10b, 10c, 10d, 20a, 20b, 20c, 20d or adding the use of a further energy consuming vehicle component 10a, 10b, 10c, 10d, 20a, 20b, 20c, 20d energy can be consumed directly instead of charging the at least first energy storage component 40 above a certain desired state of charge.

According to an aspect an electric motor 10a, 10c can operate a generator for generating energy. In particular when the electric motor 10a, 10c is not used for propelling the vehicle, for instance when the vehicle is rolling down hill, the electric motor 10a, 10c can instead function as a generator for e.g. charging the at least first energy storage component 40. In one example it is desired not to charge the at least first energy storage component 40 above a certain state of charge for minimizing the wear of the at least first energy storage component 40. In an example the generated energy can instead be used to enlarging the use at least a first energy consuming vehicle component 10a, 10b, 10c, 10d, 20a, 20b, 20c, 20d and even adding the use of a further energy consuming vehicle component 10a, 10b, 10c, 10d, 20a, 20b, 20c, 20d. In an example, if the difference value Dv is indicating that there are more energy left in the at least first energy storage component 40, further generated energy can then be used directly by an energy consuming vehicle component 10a, 10b, 10c, 10d, 20a, 20b, 20c, 20d for reducing the wear of the at least first energy storage component 40 caused by charging and discharging. In one example, if the vehicle is rolling downhill and energy is generated, the vehicle compartment cooler 20b for cooling the vehicle compartment can be run directly on the generated energy, and the vehicle can maintain the desired speed limit by the breaking effect caused by the use of the electric motor 10a, 10c as a generator. In one example, with knowledge from the route information data RID, the energy consumption strategy for the route can be determined to use an electric motor 10a, 10c at 100% power and increasing the speed, before a coming uphill of the route, and at the same time restrict or deny any use of an energy consuming vehicle component 20a, 20b, 20c, 20d for auxiliary functions of the vehicle 1 associated with vehicle occupant convenience.

According to an aspect the energy consumption control system 100 is configured to be used by an autonomous driven vehicle. According to an aspect the energy consumption control system 100 is configured to be used by a vehicle driven by an occupant. According to an aspect an occupant of the vehicle is informed, via the user interface 101a, 101b, 101c of an altered operation of at least one of the plurality of energy consuming vehicle components 10a, 10b, 10c, 10d, 20a, 20b, 20c, 20d. According to an aspect an occupant can either deny or approve an altered operation of at least one of the plurality of energy consuming vehicle components 10a, 10b, 10c, 10d, 20a, 20b, 20c, 20d via input by the user via the user interface 101a, 101b, 101c.

According to an aspect the altered operation of at least one of the plurality of energy consuming vehicle components 10a, 10b, 10c, 10d, 20a, 20b, 20c, 20d is controlled by the vehicle manufacturer via a remote server 80, as illustrated in figure 3b. According to an aspect a user at the remote server can deny or approve an altered operation of at least one of the plurality of energy consuming vehicle components 10a, 10b, 10c, 10d, 20a, 20b, 20c, 20d via input by the user via the user interface 101c.

According to an aspect the altered operation of at least one of the plurality of energy consuming vehicle components 10a, 10b, 10c, 10d, 20a, 20b, 20c, 20d is controlled by a user via a portable electronic device 25, such as a smartphone or a tablet, as illustrated in figure 3a. According to an aspect a user at the portable electronic device 25 can deny or approve an altered operation of at least one of the plurality of energy consuming vehicle components 10a, 10b, 10c, 10d, 20a, 20b, 20c, 20d via input by the user via the user interface 101c.

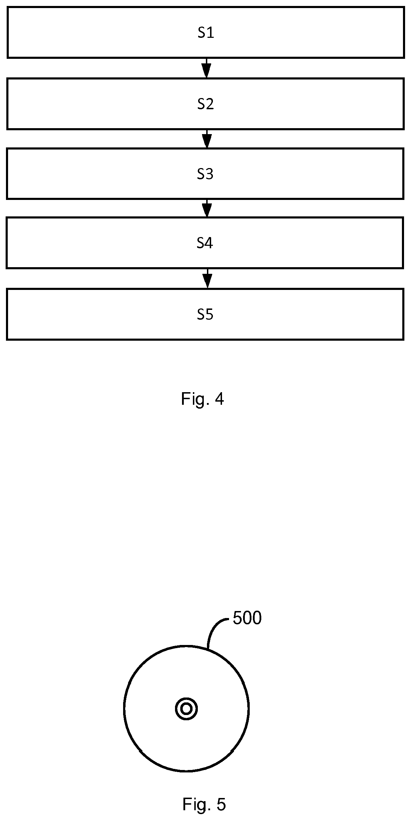

The disclosure further proposes a method for controlling energy consumption in a vehicle 1 during driving of a route. The method is illustrated in figure 4. The method comprising the step of S1 determining an energy consumption strategy for the route, wherein the energy consumption strategy comprises a total energy budget for a plurality of energy consuming vehicle components 10a, 10b, 10c, 10d, 20a, 20b, 20c, 20d, wherein the plurality of energy consuming vehicle components 10a, 10b, 10c, 10d, 20a, 20b, 20c, 20d comprise a first set of energy consuming vehicle components 10a, 10b, 10c, 10d for propelling the vehicle and a second set of energy consuming vehicle components 20a, 20b, 20c, 20d for auxiliary functions of the vehicle 1 associated with vehicle occupant convenience. The method further comprising the step of S2 determining a value of an actual consumed total energy ACTE at at least a first route position P1 along the route, wherein the actual consumed total energy ACTE is the total energy consumed by the energy consuming vehicle components 10a, 10b, 10c, 10d, 20a, 20b, 20c, 20d. The method further comprising the step of S3 determining a difference value Dv based on a difference in the actual consumed total energy value ACTEv and a predicted consumed total energy value PCTEv at the first route position P1 along the route according to the determined energy strategy, and in accordance with a determination that the difference value Dv is deviating from a predetermined threshold value PTv. The method further comprising the step of S4 determining an altered operation of at least one of the plurality of energy consuming vehicle components 10a, 10b, 10c, 10d, 20a, 20b, 20c, 20d; followed by the step of S5 executing the altered operation of the at least one of the plurality of energy consuming vehicle components 10a, 10b, 10c, 10d, 20a, 20b, 20c, 20d. This means among others that with knowledge of the difference in the actual consumed total energy value ACTEv and the predicted consumed total energy value PCTEv, the use of the energy consuming vehicle components 10a, 10b, 10c, 10d, 20a, 20b, 20c, 20d can be managed in order to maintain or improve the energy consumption strategy determined for the route. In particular the energy consuming vehicle components 10a, 10b, 10c, 10d, 20a, 20b, 20c, 20d can be managed to operate differently in order to maintain or improve the energy consumption strategy determined for the route.

According to an aspect a new energy consumption strategy is determined at the first route position P1. According to an aspect an energy consumption strategy can be determined at any point of time for a route. According to an aspect, the total energy budget is divided into a plurality of predetermined threshold values at predetermined route positions along the route. According to an aspect the sum of the divided predetermined threshold values equals the total energy budget.

According to an aspect the step of determining an altered operation of at least one of the plurality of energy consuming vehicle components 10a, 10b, 10c, 10d, 20a, 20b, 20c, 20d comprising determining an operation of at least a first energy consuming vehicle component of the first set of energy consuming vehicle components 10a, 10b, 10c, 10d for propelling the vehicle 1. This means that the operation of at least a first energy consuming vehicle component of the first set of energy consuming vehicle components 10a, 10b, 10c, 10d for propelling the vehicle 1, such as an electric motor, is altered.

According to an aspect the step of determining an altered operation of at least one of the plurality of energy consuming vehicle components 10a, 10b, 10c, 10d, 20a, 20b, 20c, 20d comprising determining an operation of at least a first energy consuming vehicle component of the second set of energy consuming vehicle components 20a, 20b, 20c, 20d for auxiliary functions of the vehicle 1. This means that the operation of at least a first energy consuming vehicle component of the second set of energy consuming vehicle components 10a, 10b, 10c, 10d for auxiliary functions of the vehicle 1, such as a vehicle compartment cooler for cooling a vehicle compartment, is altered.

According to an aspect the step of determining a value of an actual consumed total energy ACTE further comprising determining a value of an actual remaining total energy ARTE, wherein the actual remaining total energy ARTE is the total remaining energy in at least a first energy storage component 40a, 40b, 40c in the vehicle 1. The remaining total energy ARTE may be both positively and negatively affected during driving of a route. The actual remaining total energy ARTE at the first route position P1 may be different compare to when the energy consumption strategy for the route was determined. By determining the value of the actual remaining total energy ARTE an updated energy consumption strategy for the route can be determined.

According to an aspect the altered operation of the energy consuming vehicle component 10a, 10b, 10c, 10d, 20a, 20b, 20c, 20d is limited to at least one of a certain time period and a certain distance along the route. This means that after a certain time period or after a certain distance along the route, an updated difference value Dv can be determined to see if the altered operation has been effective.

According to an aspect the step of determining an altered operation of at least one of the plurality of energy consuming vehicle components 10a, 10b, 10c, 10d, 20a, 20b, 20c, 20d, is adapted so that an impact on at least one of the driving performance and the vehicle occupant comfort resulting from the altered operation of at least one of the plurality of energy consuming vehicle components 10a, 10b, 10c, 10d, 20a, 20b, 20c, 20d is above a predefined threshold operation value TOV for minimizing the effect of the altered operation. One purpose is to minimize the driving experience for the occupant during the altered operation of the at least one of the plurality of energy consuming vehicle components 10a, 10b, 10c, 10d, 20a, 20b, 20c, 20d. In one example, during a hot summer day with an outdoor temperature of 33 degrees centigrade, the vehicle compartment cooler for cooling a vehicle compartment is in the altered operation set to maintain a vehicle compartment temperature of 24 degrees centigrade, instead of 19 degrees centigrade, so that the vehicle occupant still gets a cooling effect for a convenient drive. The reduction of the consumed energy according due to the altered operation does not affect the occupant comfort compare to if the vehicle compartment cooler for cooling a vehicle compartment were turned off.

According to an aspect the step of determining an altered operation of at least one of the plurality of energy consuming vehicle components 10a, 10b, 10c, 10d, 20a, 20b, 20c, 20d, comprising at least one of restricting the use of at least a first energy consuming vehicle component 10a, 10b, 10c, 10d, 20a, 20b, 20c, 20d and denying the use a least a first energy consuming vehicle component 10a, 10b, 10c, 10d, 20a, 20b, 20c, 20d. By restricting the use of the at least first energy consuming vehicle component 10a, 10b, 10c, 10d, 20a, 20b, 20c, 20d, the at least first energy consuming vehicle component 10a, 10b, 10c, 10d, 20a, 20b, 20c, 20d can still be used but with a different operation.. By denying the use of the at least first energy consuming vehicle component 10a, 10b, 10c, 10d, 20a, 20b, 20c, 20d, the energy consumption from that at least first energy consuming vehicle component 10a, 10b, 10c, 10d, 20a, 20b, 20c, 20d is eliminated.

According to an aspect the step of determining an altered operation of at least one of the plurality of energy consuming vehicle components 10a, 10b, 10c, 10d, 20a, 20b, 20c, 20d, comprising at least one of enlarging the use at least a first energy consuming vehicle component 10a, 10b, 10c, 10d, 20a, 20b, 20c, 20d and adding the use of a further energy consuming vehicle component 10a, 10b, 10c, 10d, 20a, 20b, 20c, 20d. In other words the at least one of the plurality of energy consuming vehicle components 10a, 10b, 10c, 10d, 20a, 20b, 20c, 20d is permitted to have an altered operation that consumes more energy than before the execution of the altered operation. By adding further energy consuming vehicle components 10a, 10b, 10c, 10d, 20a, 20b, 20c, 20d the total energy consumption is increased. This allows further utilization of the energy consuming vehicle components 10a, 10b, 10c, 10d, 20a, 20b, 20c, 20d.

The disclosure further proposes a computer program product 500 comprising a non-transitory computer readable medium, having thereon a computer program comprising program instructions, the computer program being loadable into a processing circuitry 102a, 102b, 102c and configured to cause execution of the method when the computer program is run by the processing circuitry 102a, 102b, 102c.

According to an aspect the vehicle energy consumption control system 100 is configured to carry out any or more of the aspects of the described method. According to an aspect of the disclosure, the method is carried out by instructions in a software program that is downloaded and run in vehicle energy consumption control system 100.

A use case for exemplifying the use of the vehicle energy consumption control system 100 will now be described with reference to the figures 1, 2a-c and 3a.

One day, an occupant makes up plans to visit friends in city "D", as visualized in figure 2a, the next day. The occupant is using a smartphone 25 that runs an application that is connected to the vehicle 1 via a communication network 60 and that runs an application that is configured to carry out any or more of the aspects of the described method for controlling energy consumption in a vehicle 1 during driving of a route. The occupant enters time information data TID and location information data LID via the user interface 101b of the smartphone 25. In the use case example the occupant enters the destination location, city "D" and the departure time, 08:15. The vehicle energy consumption control system 100 obtains route information data RID based on the knowledge of the current location of the vehicle 1 and the destination location, city "D" in combination with the departure time, 08:15. The route information data RID obtained by the vehicle energy consumption control system 100 from a server 80 comprising route distance data, route slope data, route speed limit data, as illustrated in figures 2a-2c, together with weather information data. The given route distance, slope and speed limit data, and weather data, that tells it will be freezing cold during the route all day, is used for determining an energy consumption strategy for the route. It is determined that going from city "A" to city "C" the energy consumption needed will in itself make both the electric motor 10c and the vehicle battery 40 warmer compared to normal operation, and hence it is determined that the energy consumption of the vehicle battery heater 10b is less than normal. In the example when determining the energy consumption strategy for the route the total energy budget for the plurality of energy consuming vehicle components 10a, 10b, 10c, 10d, 20a, 20b, 20c, 20d comprising using 80% of the maximum power of the electric motor 10c for propelling the vehicle during driving of the whole route; using the electric motor heater 10d for heating the electric motor 10c at maximum power for 10 minutes after start, and heating with only 10% the remaining time during driving of the route; using the vehicle battery heater 10b for heating the vehicle battery during driving of the whole route; and using the seat heater 20a for heating the seat every second ten minutes during driving of the whole route. At the first route position P1 along the route, as illustrated in figure 2a, the difference value Dv is determined based on a difference in the actual consumed total energy value ACTEv and a predicted consumed total energy value PCTEv. In the example the determined difference value Dv is indicating that too much energy has been consumed compare to the predicted consumed total energy. This results in a determination of an altered operation of at least one of the plurality of energy consuming vehicle components 10a, 10b, 10c, 10d, 20a, 20b, 20c, 20d. In the use case the seat heater 20a for heating the seat is denied to be used the remaining driving of the route. Further, the electric motor 10c for propelling the vehicle is restricted to only be used to 45% of the maximum power the remaining driving of the route. The occupant reaches the destination according to the energy consumption strategy thanks to the altered operation of the electric motor 10c and the altered operation of the seat heater 20a.

## Claims

1. A method for controlling energy consumption in a vehicle (1) during driving of a route, the method comprising the steps of
- (S1) determining an energy consumption strategy for the route, wherein the energy consumption strategy comprises a total energy budget for a plurality of energy consuming vehicle components (10a, 10b, 10c, 10d, 20a, 20b, 20c, 20d), wherein the plurality of energy consuming vehicle components (10a, 10b, 10c, 10d, 20a, 20b, 20c, 20d) comprise a first set of energy consuming vehicle components (10a, 10b, 10c, 10d) for propelling the vehicle and a second set of energy consuming vehicle components (20a, 20b, 20c, 20d) for auxiliary functions of the vehicle (1) associated with vehicle occupant convenience;
- (S2) determining a value of an actual consumed total energy (ACTE) at at least a first route position (P1) along the route, wherein the actual consumed total energy (ACTE) is the total energy consumed by the energy consuming vehicle components (10a, 10b, 10c, 10d, 20a, 20b, 20c, 20d);
- (S3) determining a difference value (Dv) based on a difference in the actual consumed total energy value (ACTEv) and a predicted consumed total energy value (PCTEv) at the first route position (P1) along the route according to the determined energy strategy, and in accordance with a determination that the difference value (Dv) is deviating from a predetermined threshold value (PTv),
- (S4) determining an altered operation of at least one of the plurality of energy consuming vehicle components (10a, 10b, 10c, 10d, 20a, 20b, 20c, 20d); and
- (S5) executing the altered operation of the at least one of the plurality of energy consuming vehicle components (10a, 10b, 10c, 10d, 20a, 20b, 20c, 20d).

2. The method according to according to claim 1, wherein the step of determining an altered operation of at least one of the plurality of energy consuming vehicle components (10a, 10b, 10c, 10d, 20a, 20b, 20c, 20d) comprising determining an operation of at least a first energy consuming vehicle component of the first set of energy consuming vehicle components (10a, 10b, 10c, 10d) for propelling the vehicle (1).

3. The method according to according to claim 1, wherein the step of determining an altered operation of at least one of the plurality of energy consuming vehicle components (10a, 10b, 10c, 10d, 20a, 20b, 20c, 20d) comprising determining an operation of at least a first energy consuming vehicle component of the second set of energy consuming vehicle components (20a, 20b, 20c, 20d) for auxiliary functions of the vehicle (1).

4. The method according to any of the preceding claims wherein the step of determining a value of an actual consumed total energy (ACTE) further comprising determining a value of an actual remaining total energy (ARTE), wherein the actual remaining total energy (ARTE) is the total remaining energy in at least a first energy storage component (40) in the vehicle (1).

5. The method of any of the preceding claims, wherein the altered operation of the energy consuming vehicle component (10a, 10b, 10c, 10d, 20a, 20b, 20c, 20d) is limited to at least one of a certain time period and a certain distance along the route.

6. The method according to any of the preceding claims, wherein the step of determining an altered operation of at least one of the plurality of energy consuming vehicle components (10a, 10b, 10c, 10d, 20a, 20b, 20c, 20d) is adapted so that an impact on at least one of the driving performance and the vehicle occupant comfort resulting from the altered operation of at least one of the plurality of energy consuming vehicle components (10a, 10b, 10c, 10d, 20a, 20b, 20c, 20d) is above a predefined threshold operation value (TOV) for minimizing the effect of the altered operation.

7. The method according to any of the preceding claims, wherein the step of determining an altered operation of at least one of the plurality of energy consuming vehicle components (10a, 10b, 10c, 10d, 20a, 20b, 20c, 20d) comprising at least one of restricting the use of at least a first energy consuming vehicle component (10a, 10b, 10c, 10d, 20a, 20b, 20c, 20d) and denying the use a least a first energy consuming vehicle component (10a, 10b, 10c, 10d, 20a, 20b, 20c, 20d).

8. The method according to any of the preceding claims, wherein the step of determining an altered operation of at least one of the plurality of energy consuming vehicle components (10a, 10b, 10c, 10d, 20a, 20b, 20c, 20d) comprising at least one of enlarging the use at least a first energy consuming vehicle component (10a, 10b, 10c, 10d, 20a, 20b, 20c, 20d) and adding the use of a further energy consuming vehicle component (10a, 10b, 10c, 10d, 20a, 20b, 20c, 20d).

9. A vehicle energy consumption control system (100) for controlling the energy consumption in a vehicle (1) during driving of a route, the vehicle energy consumption control system (100) comprises:
• a plurality of energy consuming vehicle components (10a, 10b, 10c, 10d, 20a, 20b, 20c, 20d);
• at least a first energy consumption control module (50) configured to determine the energy consumption of the plurality of energy consuming vehicle components (10a, 10b, 10c, 10d, 20a, 20b, 20c, 20d);
• a processing circuitry (102a, 102b, 102c) operatively connected to the at least first energy consumption control module (50), the processing circuitry (102a, 102b, 102c) is configured to cause the vehicle climate control system (100) to:
- determine an energy consumption strategy for the route, wherein the energy consumption strategy comprises a total energy budget for a plurality of energy consuming vehicle components (10a, 10b, 10c, 10d, 20a, 20b, 20c, 20d), wherein the plurality of energy consuming vehicle components (10a, 10b, 10c, 10d, 20a, 20b, 20c, 20d) comprise a first set of energy consuming vehicle components (10a, 10b, 10c, 10d) for propelling the vehicle and a second set of energy consuming vehicle components (20a, 20b, 20c, 20d) for auxiliary functions of the vehicle (1) associated with vehicle occupant convenience;
- determine a value of an actual consumed total energy (ACTE) at the first route position (P1), wherein the actual consumed total energy (ACTE) is the total energy consumed by the energy consuming vehicle components (10a, 10b, 10c, 10d, 20a, 20b, 20c, 20d);
- determine a difference value (Dv) based on a difference in the actual consumed total energy value (ACTEv) and a predicted consumed total energy value (PCTEv) at the first route position (P1) along the route according to the determined energy strategy, and in accordance with a determination that the difference value (Dv) is deviating from a predetermined threshold value (PTv), determining an altered operation of at least one of the plurality of energy consuming vehicle components (10a, 10b, 10c, 10d, 20a, 20b, 20c, 20d); and
- execute the altered operation of the first energy consuming vehicle component (10a, 10b, 10c, 10d, 20a, 20b, 20c, 20d).

10. The vehicle energy consumption control system (100) according to claim 9, the vehicle energy consumption control system (100) further comprises:
• at least a first energy storage component (40) configured to store energy to be consumed by the at least first energy consuming vehicle component (10a, 10b, 10c, 10d, 20a, 20b, 20c, 20d) during driving of the route.

11. The vehicle energy consumption control system (100) according to any of the claims 9-10, wherein the processing circuitry (102a, 102b, 102c) is further configured to cause the vehicle energy consumption control system (100) to determine an altered operation of at least one of the plurality of energy consuming vehicle components (10a, 10b, 10c, 10d, 20a, 20b, 20c, 20d) comprising determining an operation of at least a first energy consuming vehicle component of the first set of energy consuming vehicle components (10a, 10b, 10c, 10d) for propelling the vehicle (1).

12. The vehicle energy consumption control system (100) according to any of the claims 9-11, wherein the processing circuitry (102a, 102b, 102c) is further configured to cause the vehicle energy consumption control system (100) to determine an altered operation of at least one of the plurality of energy consuming vehicle components (10a, 10b, 10c, 10d, 20a, 20b, 20c, 20d) comprising determining an operation of at least a first energy consuming vehicle component of the second set of energy consuming vehicle components (20a, 20b, 20c, 20d) for auxiliary functions of the vehicle (1).

13. The vehicle energy consumption control system (100) according to any of the claims 9-12, wherein the processing circuitry (102a, 102b, 102c) is further configured to cause the vehicle energy consumption control system (100) to determine an altered operation of at least one of the plurality of energy consuming vehicle components (10a, 10b, 10c, 10d, 20a, 20b, 20c, 20d) comprising at least one of restricting the use of at least a first energy consuming vehicle component (10a, 10b, 10c, 10d, 20a, 20b, 20c, 20d) and denying the use of at least a first energy consuming vehicle component (10a, 10b, 10c, 10d, 20a, 20b, 20c, 20d).

14. The vehicle energy consumption control system (100) according to any of the claims 9-13, wherein the processing circuitry (102a, 102b, 102c) is further configured to cause the vehicle energy consumption control system (100) to determine an altered operation of at least one of the plurality of energy consuming vehicle components (10a, 10b, 10c, 10d, 20a, 20b, 20c, 20d) comprising at least one of enlarging the use at least a first energy consuming vehicle component (10a, 10b, 10c, 10d, 20a, 20b, 20c, 20d) and adding the use of a further energy consuming vehicle component (10a, 10b, 10c, 10d, 20a, 20b, 20c, 20d).

15. A computer program product (500) comprising a non-transitory computer readable medium, having thereon a computer program comprising program instructions, the computer program being loadable into a processing circuitry (102a, 102b, 102c) and configured to cause execution of the method according to any of claims 1 through 8 when the computer program is run by the processing circuitry (102a, 102b, 102c).
